Europäisches Patentamt

European Patent Office

Office européen des brevets

(11) Veröffentlichungsnummer: **0 191 346**
A2

## (12) EUROPÄISCHE PATENTANMELDUNG

(21) Anmeldenummer: 86101040.3

(22) Anmeldetag: 27.01.86

(51) Int. Cl.⁴: **G 01 N 29/04**

(30) Priorität: 07.02.85 DE 3504210

(43) Veröffentlichungstag der Anmeldung: 20.08.86
Patentblatt 86/34

(84) Benannte Vertragsstaaten: **DE FR SE**

(71) Anmelder: **KRAFTWERK UNION AKTIENGESELLSCHAFT, Wiesenstrasse 35, D-4330 Mülheim (Ruhr) (DE)**

(72) Erfinder: **Ortlieb, Erhard, Dipl.-Phys., Erlenstrasse 5, D-8501 Kalchreuth (DE)**
Erfinder: **Wahode, Peter, Dipl.-Ing., Dina-Ernstberger-Strasse 30, D-8521 Neunkirchen (DE)**

(74) Vertreter: **Mehl, Ernst, Dipl.-Ing. et al, Postfach 22 01 76, D-8000 München 22 (DE)**

(54) Einrichtung zum Bestimmen von Oberflächenrissen.

(57) Die Erfindung betrifft eine Einrichtung zum Bestimmen der Tiefe (S) von Rissen (10) in der Oberfläche von Werkstükken mit einem Ultraschallwandler (2). Es ist vorgesehen, daß der Ultraschallwandler (2) mit einem Analysator (4), der ein Frequenzspektrum (5) eines Ultraschallsignales bildet, verbunden ist. Der Analysator (4) ist mit einer Auswerteeinheit (6) verbunden, die eine effektive Bandbreite (Q), den Quotienten aus dem Integral des Frequenzspektrums (5) und dem Ordinatenwert (Y) des Schwerpunktes (7) der integrierten Fläche des Frequenzspektrums (5) bestimmt. Die Auswerteeinheit (6) ist mit einem Anzeigegerät (8) für die Rißtiefe (S), die mit der effektiven Bandbreite (Q) korreliert ist, verbunden.

KRAFTWERK UNION AKTIENGESELLSCHAFT     Unser Zeichen
VPA 85 P 6013 E

Einrichtung zum Bestimmen von Oberflächenrissen

Die Erfindung betrifft eine Einrichtung zum Bestimmen der Tiefe von Rissen in der Oberfläche von Werkstücken mit einem Ultraschallwandler.

Eine derartige Einrichtung ist bekannt (Krautkrämer: Werkstoffprüfung mit Ultraschall, Kapiteln 3.2 und 1.10). Hierbei werden von einem Ultraschallwandler Ultraschallwellen erzeugt und die in einem Werkstück von einem Riß reflektierten Echos registriert. Das reflektierte Signal wird vom Ultraschallwandler wieder aufgefangen und dann bewertet. Die Höhe des gemessenen Echosignales gibt dann einen Hinweis auf die Rißtiefe.

Die Einrichtung weist einen Detektor für das reflektierte Signal und eine Auswerteeinheit auf, die als Maß für die Rißtiefe die Amplitude des Signals bewertet.

Bei einer derartigen Einrichtung ist insbesondere bei relativ kleinen Rissen die registrierte Signalamplitude nicht mit der Rißtiefe korreliert. Eine Korrelation ist zwar bei Testnuten, die ein regelmäßiges, meist V-förmiges Profil haben gegeben, ist aber nicht wegen der unregelmäßigen Form natürlicher Risse auf deren Signal übertragbar.

04.02.1985 Mnl 2 Ant

Außerdem ist die Prüfsicherheit der Einrichtung durch die Wellenlänge der detektierenden Ultraschallwelle begrenzt. Risse mit einer Tiefe, die wesentlich kleiner ist als die Ultraschallwellenlänge, können nämlich um so weniger sicher erkannt werden, je geringer das Verhältnis von Rißtiefe und Wellenlänge ist.

Der Erfindung liegt die Aufgabe zugrunde, eine Einrichtung zum Bestimmen der Rißtiefe in Werkstücken mittels Ultraschall zu entwickeln, die unabhängig vom Profil eines Risses eine fundierte Korrelation zwischen gemessenem Signal und Rißtiefe gewährleistet. Dadurch soll für einen beliebigen Riß aus dem reflektierten Signal die Rißtiefe zu bestimmen sein. Darüber hinaus sollen mit der Einrichtung selbst kleine Risse erkannt werden.

Die Aufgabe wird erfindungsgemäß dadurch gelöst, daß der Ultraschallwandler mit einem Analysator, der ein Frequenzspektrum eines Ultraschallsignales bildet, verbunden ist, daß der Analysator mit einer Auswerteeinheit verbunden ist, die eine effektive Bandbreite, den Quotienten aus dem Integral des Frequenzspektrums und dem Ordinatenwert des Schwerpunktes der integrierten Fläche des Frequenzspektrums bestimmt, wobei die effektive Bandbreite mit der Rißtiefe korreliert, und daß die Auswerteeinheit mit einem Anzeigegerät für die Rißtiefe verbunden ist.

Die Korrelation erhält man, indem die bekannte Tiefe künstlich erzeugter Testnuten mit der gemessenen effektiven Bandbreite in Relation gesetzt wird. Durch die Wahl einer höheren Ultraschallfrequenz wird außerdem die Prüfsicherheit für kleine Risse verbessert.

Mit der erfindungsgemäßen Einrichtung wird der Vorteil erzielt, daß die aus dem empfangenen Signal statt einer Amplitude gewonnene effektive Bandbreite von der Profilform der Risse unabhängig ist. Eine an Testnuten mit V-Profil bestimmte Korrelation ist also auf natürliche Risse mit unregelmäßigem Profil übertragbar.

Um an Testnuten eine Korrelation zu bestimmen, ist beispielsweise vorgesehen, daß der Ultraschallwandler auf einem Manipulator angeordnet ist, der den Ultraschallwandler verschiebt.

Mit dem Manipulator wird der Ultraschallwandler so lange verschoben, bis für zwei unterschiedliche Testnuten bekannter Tiefe in einem Hüllrohr möglichst weit voneinander entfernt liegende effektive Bandbreiten gemessen werden. Dadurch erzielt man eine gute Korrelation. Nach erfolgter Kalibrierung kann erfindungsgemäß für unterschiedlich geformte Risse in einem Hüllrohr mit großer Genauigkeit deren Tiefe bestimmt und einem Anzeigegerät zugeführt werden. Hüllrohre, z.B. für Reaktor-Brennstäbe, können damit zuverlässig geprüft werden.

Ein Ausführungsbeispiel ist in der Zeichnung schematisch dargestellt:

Fig. 1   zeigt eine Einrichtung zur Bestimmung der Tiefe
        von Oberflächenrissen in Hüllrohren.

Fig. 2   zeigt das Frequenzspektrum eines an der Innen-
        oberfläche des Hüllrohres reflektierten Ultra-
        schallsignals.

Fig. 3   zeigt den funktionellen Zusammenhang der Rißtiefe
        mit der effektiven Bandbreite.

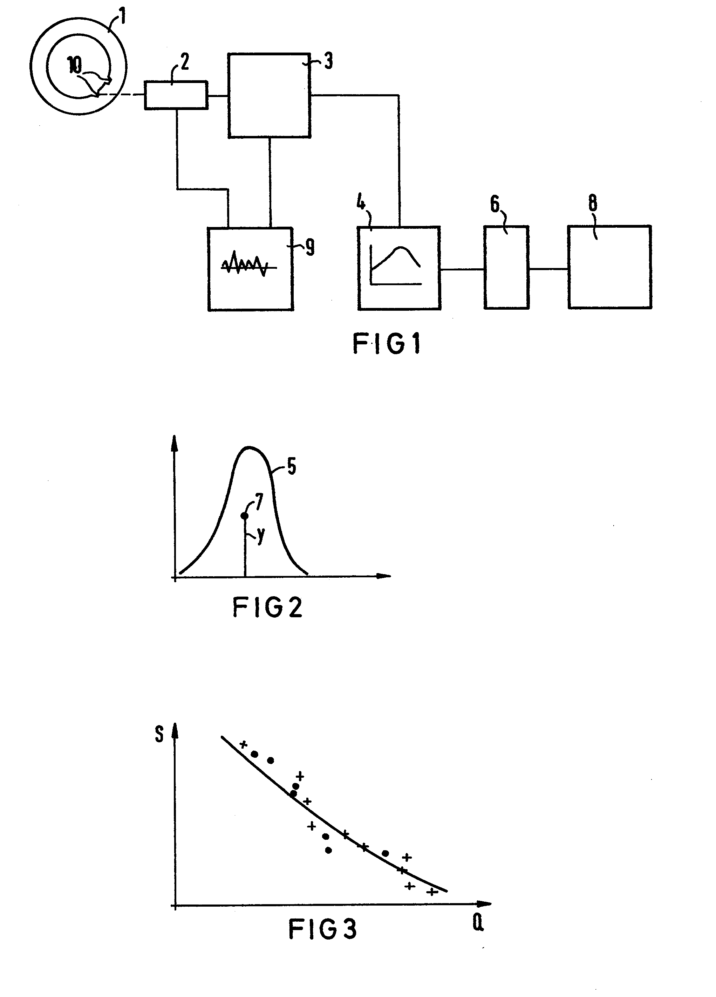

Ein Hüllrohr 1 für Brennstäbe eines Kernreaktors kann an
seiner Oberfläche Risse 10 aufweisen. Ein Ultraschallwandler 2 detektiert diese Risse 10, indem er Ultraschallsignale aussendet und die an den Rissen 10 in der
Innenoberfläche des Hüllrohres 1 reflektierten Echos
empfängt. Das Ausgangssignal des Ultraschallwandlers 2
wird einem Detektor 3 zugeführt, der so justiert ist,
daß er einen von einem Riß 10 im Hüllrohr 1 kommenden
Ultraschallimpuls sicher detektiert. Mit dem Ultraschallwandler 2 und dem Detektor 3 steht zur Überwachung der Signale ein Oszilloskop 9 in Verbindung. Für
den detektierten Impuls wird dann in einem Analysator 4
nach der Fourieranalyse ein Frequenzspektrum 5 erzeugt.
Man vergleiche Fig. 2.

Zur weiteren Auswertung des Frequenzspektrums 5 ist der
Ausgang des Analysators 4 nach Fig. 1 mit einer Auswerteeinheit 6 verbunden. Dort wird die Fläche unter dem
Frequenzspektrum 5 durch Integrieren bestimmt. Außerdem
werden die Koordinaten des Schwerpunktes 7 dieser Fläche

0191346

und als effektive Bandbreite Q der Quotient aus der Fläche unter dem Frequenzspektrum 5 und dem Ordinatenwert Y des Schwerpunktes 7 bestimmt. Diese effektive Bandbreite Q ist mit der Tiefe S der Risse 10 im Hüllrohr 1 korreliert.

Das Profil der Risse 10 wirkt sich auf die Tiefenanzeige nicht aus. Nach Fig. 3 liegen die Wertepaare für Rißtiefe S und effektive Bandbreite Q sowohl für Testnuten mit V-Profil (Kreuze) als auch für natürliche Risse (Punkte) mit ausreichender Genauigkeit auf einer Kurve.

Die beim Kalibrieren mit V-förmigen Testnuten gewonnene Beziehung wird in der Auswerteeinheit 6 gespeichert. Bei jeder Messung von unregelmäßigen Rissen im Hüllrohr 1 kann dann aus dem Frequenzspektrum 5 des reflektierten Impulses in der Auswerteeinheit 6 die Tiefe S des Risses 10 bestimmt werden.

Die Auswerteeinheit 6 steht mit einem Anzeigegerät 8 in Verbindung, das die Tiefe S des Risses 10 in der Wand des Hüllrohres 1 beispielsweise in Mikrometer anzeigt.

3 Figuren
2 Patentansprüche

## Liste der Bezugszeichen

1 Hüllrohr

2 Ultraschallwandler

3 Detektor

4 Analysator

5 Frequenzspektrum

6 Auswerteeinheit

7 Schwerpunkt der integrierten Fläche

8 Anzeigegerät

9 Oszilloskop

10 Risse

S Rißtiefe

Q effektive Bandbreite

Y Ordinatenwert des Schwerpunktes

Patentansprüche

1. Einrichtung zum Bestimmen der Tiefe (S) von Rissen (10) in der Oberfläche von Werkstücken mit einem Ultraschallwandler (2), d a d u r c h   g e k e n n - z e i c h n e t ,

daß der Ultraschallwandler (2) mit einem Analysator (4), der ein Frequenzspektrum (5) eines Ultraschallsignales bildet, verbunden ist,

daß der Analysator (4) mit einer Auswerteeinheit (6) verbunden ist, die eine effektive Bandbreite (Q), den Quotienten aus dem Integral des Frequenzspektrums (5) und dem Ordinatenwert (Y) des Schwerpunktes (7) der integrierten Fläche des Frequenzspektrums (5) bestimmt, wobei die effektive Bandbreite (Q) mit der Rißtiefe (S) korreliert, und

daß die Auswerteeinheit (6) mit einem Anzeigegerät (8) für die Rißtiefe (S) verbunden ist.

2. Einrichtung nach Anspruch 1, d a d u r c h   g e - k e n n z e i c h n e t , daß der Ultraschallwandler (2) auf einem Manipulator angeordnet ist, der den Ultraschallwandler (2) verschiebt, wodurch für zwei Testnuten bekannter Tiefe in einem Hüllrohr (1) relativ weit voneinander abweichende effektive Bandbreiten (Q) gemessen werden.

0191346

1/1

FIG1

FIG2

FIG3